# EUROPÄISCHE PATENTSCHRIFT

(11) **EP 0 826 889 B1**
(45) Veröffentlichungstag und Bekanntmachung des Hinweises auf die Patenterteilung: **08.03.2000**
(21) Anmeldenummer: 97810411.5
(22) Anmeldetag: 25.06.1997
(51) Int. Cl.: F16B 37/04

(54) **Befestigungselement für Profilschienen**
Fastening element for profiles
Elément de fixation pour profilés

(30) Priorität: 03.09.1996 DE 19635632
(43) Veröffentlichungstag der Anmeldung: 04.03.1998
(73) Patentinhaber: HILTI Aktiengesellschaft, 9494 Schaan (LI)
(72) Erfinder: Hermann, Fritz, 86899 Landsberg/Lech (DE); Mirsberger, Helmut, 81377 München (DE); Sedlmeier, Andreas, 86932 Ummendorf (DE); Dischinger, Jakob, 82272 Eismerszell (DE); Hoffmann, Armin, 86899 Landsberg/Lech (DE)
(74) Vertreter: Wildi, Roland

(56) Entgegenhaltungen:
- FR-A- 2 548 293
- NL-A- 8 003 184

## Beschreibung

Die Erfindung betrifft ein Befestigungselement für Profilschienen gemäss dem Oberbegriff des Patentanspruchs 1.

In der Haustechnik werden vielfach Schienensysteme eingesetzt, um Installationen beispielsweise im Elektro-, Heizungs-, Klima-, Lüftungs- und Sanitärbereich vorzunehmen. Die Schienensysteme umfassen Profilschienen, deren Querschnitt im wesentlichen C-förmig ausgebildet ist. Die Weite einer in Längsrichtung der Profilschiene verlaufenden, schlitzförmigen Öffnung wird von zwei sich parallel zueinander erstreckenden Schenkeln begrenzt, deren parallel verlaufende freie Enden einander zugewandt sind. Zur Befestigung von Bauteilen sind Befestigungselemente vorgesehen, die in das Innere der Profilschiene einsetzbar sind und an den die schlitzartige Öffnung berandenden freien Enden der Schenkel festklemmbar sind. Ein weit verbreitetes Befestigungselement stellt die sogenannte Hammerkopfschraube dar, die eine etwa parallelogrammförmig ausgebildete Schienenmutter umfasst, die mit einer Gewindestange verbunden ist. Die Höhe der parallelogrammförmigen Schienenmutter ist derart bemessen, dass sie bei parallel zur Längserstreckung der schlitzartigen Öffnung verlaufenden Längsseiten von aussen in das Innere der Profilschiene einführbar ist. Durch Verdrehen der Schienenmutter überbrückt ihre über die Breitseiten gemessene Längserstreckung die Weite der schlitzartigen Öffnung und hindert die Schienenmutter am Herausfallen aus der Profilschiene. Zur Fixierung des Befestigungselements in der Profilschiene sind eine Unterlagscheibe und eine Mutter vorgesehen. Durch Aufschrauben der Mutter auf die Gewindestange werden die in Längsrichtung der Profilschiene verlaufenden, die schlitzartige Öffnung berandenden freien Enden der Schenkel zwischen der Schienenmutter und der Unterlagscheibe eingeklemmt, und das Befestigungselement ist dadurch fixierbar.

Ein wesentlicher Nachteil dieses bekannten Befestigungselements für Schienensysteme besteht in seiner Mehrteiligkeit. Das Befestigungselement umfasst immer wenigstens eine Schienenmutter mit angeformter Gewindestange und eine zusätzliche Unterlagscheibe sowie eine auf die Gewindestange aufschraubbare Mutter. Zur Fixierung des Befestigungselements muss der Gewindebolzen gedreht werden, um die Schienenmutter in die richtige Lage relativ zur Öffnung zu bringen, in der sie nicht herausfällt. Danach muss die Unterlagscheibe relativ umständlich auf die Gewindestange aufgeschoben werden und die zusätzliche Mutter aufgeschraubt werden. Dabei muss darauf geachtet werden, dass die Schienenmutter nicht verdreht wird, um zu verhindern, dass sie wieder aus der Schiene herausfällt. Die Handhabung dieser bekannten Hammerkopfschraube erfordert daher beide Hände, was, beispielsweise auf einer Leiter stehend, nicht immer unproblematisch ist. Zur Montage und zur Demontage muss die Lage der Schienenmutter des Befestigungselements exakt mit dem Verlauf der schlitzartigen Öffnung zur Übereinstimmung gebracht werden und es muss darauf geachtet werden, die Schienenmutter nicht zu überdrehen, um sie durch die Öffnung einführen zu können bzw. um sie wieder aus dem Inneren der Profilschiene zu entfernen. Die Handhabung dieses bekannten Befestigungselements ist umständlich und langwierig. Zudem ist dieses Befestigungselement nicht vorfixierbar und es besteht die Gefahr, dass es bei nicht angezogener Mutter wieder aus der Schienenöffnung fällt. Durch die fehlende Vorfixierung ist eine Feinpositionierung des Befestigungselements längs der Profilschiene erschwert.

Aufgabe der vorliegenden Erfindung ist es daher, ein Befestigungselement für Schienensysteme mit C-Profilschienen zu schaffen, welches einfach, schnell und in Ein-Hand-Bedienung an der Profilschiene fixiert und wieder gelöst werden kann. Umständliche Ein- bzw. Ausfädelvorgänge sollen verhindert werden. Es soll ein Befestigungselement geschaffen werden, das vorfixierbar ist und bereits vor dem endgültigen Befestigen an der Schiene unverlierbar gehalten ist. Ein unbeabsichtigtes Lösen des Befestigungselements soll verhindert werden. Im vorfixierten Zustand soll eine Feinpositionierung des Befestigungselements längs der Profilschiene ermöglicht sein. Das Befestigungselement soll einfach und kostengünstig in der Herstellung sein und insbesondere eine serienmässige Herstellung mit Standardwerkzeugen erlauben.

Die Lösung dieser Aufgaben besteht in einem Befestigungselement für Profilschienen, welches die im Patentanspruch 1 angeführten Merkmale aufweist. Das erfindungsgemässe Befestigungselement ist für Profilschienen ausgelegt, die einen im wesentlichen C-förmigen Querschnitt besitzen und eine in Längsrichtung verlaufende, schlitzartige Öffnung aufweisen, die von den freien Enden zweier parallel zueinander ausgerichteter Schenkel berandet ist. Das Befestigungselement umfasst eine Schienenmutter, die bei parallel zu der Längserstreckung der Öffnung verlaufenden Längsseiten durch die schlitzartige Öffnung in das Innere der Profilschiene einführbar ist. Die Schienenmutter ist im Inneren der Profilschiene derart drehbar, dass ihre Längserstreckung, die grösser ist als die Weite der schlitzartigen Öffnung, die Öffnung überbrückt. Eine Klemmplatte überragt die Schienenmutter wenigstens bereichsweise und ist in einem axialen Abstand von der Schienenmutter angeordnet, der wenigstens in einem Randabschnitt, der in Wirkverbindung mit dem freien Ende eines Schenkels bringbar ist, kleiner ist als die Dicke der freien Enden der Schenkel. Der Abstand ist unter Klemmung der freien Enden der Schenkel verringerbar. Die Klemmplatte und die Schienenmutter sind einstückig ausgebildet und über einen federnden Verbindungssteg miteinander verbunden. Der Verbindungssteg ist derart am Rand der Schienenmutter angelenkt, dass er bei parallel zur Längserstreckung der Öffnung verlaufenden Längsseiten der Schienenmutter in Anlage mit dem freien Ende des einen Schenkels ist und bei gegenüber der Längserstreckung der Öffnung verdrehten Längsseiten der Schienenmutter in Anlage mit dem freien Ende des gegenüberliegenden Schenkels ist.

Die einstückige Ausbildung des Befestigungselements erleichtert dessen Handhabung. Das Befestigungselement kann mit einer Hand fixiert und wieder gelöst werden. Die Breite der Schienenmutter ist auf die Weite der schlitzartigen Öffnung abgestimmt. Die Form der Schienenmutter ist derart gewählt, dass sie bei parallel zur Längserstreckung der schlitzartigen Öffnung verlaufenden Längsseiten einfach durch die Öffnung in das Innere der Profilschiene eingeführt werden kann. Die Länge der Schienenmutter ist grösser als die Weite der Öffnung und ist derart bemessen, dass sie ein Verdrehen der Schienenmutter innerhalb der Profilschiene um einen gewissen Winkelbetrag erlaubt. Danach überbrückt die Längserstreckung der verdrehten Schienenmutter die Öffnung, und das Befestigungselement ist am Herausfallen aus der Profilschiene gehindert. Eine einstückig mit der Schienenmutter verbundene Klemmplatte überragt diese und ist über einen federnden Verbindungssteg mit der Schienenmutter verbunden. Die Klemmplatte ist in einem Abstand von der Schienenmutter angeordnet, der wenigstens in einem Randbereich kleiner ist als die Dicke der freien Enden der Schenkel. Beim Verdrehen des Befestigungselements nach dem Einführung der Schienenmutter in die Öffnung kommt dieser engere Bereich in Eingriff mit dem freien Ende eines Schenkels. Dadurch wird bereits eine gewisse Vorfixierung des Befestigungselements erreicht. Durch die Vorfixierung kann das Befestigungselement nicht mehr von selbst verrücken, es erlaubt aber immer noch eine gewünschte Feinpositionierung. Der Abstand zwischen der Schienenmutter und der Klemmplatte ist unter Klemmung der freien Enden der Schenkel noch weiter verringerbar, wodurch das Befestigungselement in seiner Endlage fixierbar ist.

Der federnde Verbindungssteg ist derart angeordnet, dass er in zweifacher Hinsicht als Anschlag dient. Insbesondere ist seine Anordnung in Bezug auf die Schienenmutter derart gewählt, dass er bei parallel zur Längserstreckung der Öffnung ausgerichteten Längsseiten der Schienenmutter beim Einführen derselben durch die Öffnung in Anlage mit dem freien Enden eines der Schenkel kommt. Der Verbindungssteg dient somit als Ausricht- und Einführhilfe. Danach wird das Befestigungselement zur Vorfixierung in der Profilschiene um einen gewissen Winkelbetrag gedreht, bis der Verbindungssteg am freien Ende des gegenüberliegenden Schenkels anliegt. Der Verbindungssteg verhindert ein Überdrehen des Befestigungselements bzw. der im Inneren der Profilschiene befindlichen Schienenmutter, deren Längserstreckung nun die Weite der Öffnung überragt und stellt derart sicher, dass die Schienenmutter nicht aus der Öffnung gleitet. Gleichzeitig dient der am freien Ende des gegenüberliegenden Schenkels anliegende Verbindungssteg als optische Anzeige für die zuverlässige Vorfixierung des Befestigungselements. Zum Lösen des Befestigungselements wird dieses wieder zurückgedreht bis der Verbindungssteg wieder am freien Ende des gegenüberliegenden Schenkels anliegt. Auch in diesem Fall verhindert die Anordnung des Verbindungsstegs ein Überdrehen des Befestigungselements bzw. der Schienenmutter. Die Längsseiten der Schienenmutter sind sodann wieder parallel zur Längserstreckung der Öffnung ausgerichtet und das Befestigungselement kann von der Profilschiene abgenommen werden.

Eine platzsparende Ausführungsvarinate des Befestigunselements ergibt sich, wenn der Verbindungssteg derart angeordnet ist, dass die Axialprojektion einer seiner Seitenkannten im wesentlichen in gerader Verlängerung einer Längsseite der Schienenmutter liegt.

Indem die Anordnung des Verbindungsstegs derart gewählt ist, dass die in das Innere der Profilschiene eingesetzte Schienenmutter um maximal etwa 45° verdrehbar ist, kann die provisorische Vorfixierung des Befestigungselements mit geringstem Aufwand erzielt werden. Bei geeigneter Ausrichtung der Klemmplatte in Bezug auf die Schienenmutter kann eine zusätzliche optische Befestigungskontrolle erzielt werden, indem die beispielsweise rechteckige oder quadratische Klemmplatte beim Einsetzen der Schienenmutter diagonal zur Längserstreckung ausgerichtet ist und nach einer Drehung um etwa 45° im vorfixierten Zustand parallel zur Längserstreckung der Öffnung ausgerichtete Seiten aufweist.

Vorzugsweise liegt der Randabschnitt, an dem der Abstand der Klemmplatte von der Schienenmutter kleiner ist als die Dicke des freien Endes der Schenkel, dem Verbindungssteg gegenüber und ist kleiner als der Abstand im Bereich des Verbindungsstegs. Auf diese Weise kommt es erst bei vollständiger Verdrehung des Befestigungselements bis zum Anschlag des Verbindungsstegs am freien Ende des Schenkels zur Vorfixierung. Eine nur leichte, unzuverlässige Klemmung in Zwischenpositionen wird verhindert.

In einer vorteilhaften Ausführungsvariante der Erfindung sind an wenigstens zwei einander gegenüberliegenden Bereichen an der Unterseite der Klemmplatte keilförmige Nasen vorgesehen, die bei gegenüber der Längserstreckung der Öffnung verdrehten Längsseiten der Schienenmutter die Aussenseiten der Schenkel übergreifen. Die Nasen umgreifen die Schiene im vorfixierten Zustand des Befestigungselements und verhindern ein Ausformen der Schenkel der Profilschiene bei der endgültigen Fixierung durch zwangsweise Verringerung des Abstands zwischen der Klemmplatte und der Schienenmutter. Zugleich dienen die Nasen als Rückdrehsicherung und verhindern ein ungewolltes Verdrehen und Lösen des vorfixierten Befestigungselements bei der Feinpositionierung. Die keilförmige Ausbildung erleichtert das Gleiten der Nasen über die einander zugewandten freien Enden der Schenkel und verhindert ein Verhaken der Nasen beim Verdrehen des Befestigungselements zur Vorfixierung.

Die mit den einander zugewandten freien Enden der Schenkel in Wirkverbindung stehenden Flächen der Schienenmutter sind mit Vorteil mit einer Verzahnung oder Rändelung oder dergleichen Struktur versehen. Diese greift formschlüssig in eine korrespondierend an den freien Enden ausgebildete Struktur ein und erhöht die Rutschlastwerte des Befestigungselements in Längsrichtung der Profilschiene.

In der Klemmplatte und in der Schienenmutter ist jeweils eine Bohrung vorgesehen, die einander axial überdecken. Die Bohrungen dienen der Aufnahme einer Gewindestange oder einer Spannschraube oder dergleichen. Mit Hilfe der in die Bohrungen eingedrehten Gewindestange oder Spannschraube kann der Abstand zwischen der Klemmplatte und der Schienenmutter sehr einfach zwangsverstellt werden. Gleichzeitig dient die Gewindestange oder Spannschraube als Anbindungsteil für ein Bauteil oder eine Rohrschelle und dergleichen.

In einer besonderen Variante der Erfindung sind zwei oder mehrere Befestigungselemente zu einem Montagewinkel verbunden. Dazu sind zwei der Befestigungselemente an ihren den Verbindungsstegen gegenüberliegenden Seiten der Klemmplatte miteinander verbunden und unter einem bestimmten Winkel zueinander geneigt. Der Montagewinkel besitzt den Vorteil, dass er nicht nur von der Seite in die Schiene eingeschoben werden kann, sondern dass er auch frontal durch die längsverlaufende Öffnung eingesetzt werden kann. In seiner Verwendung als Verbindungselement für Profilschienen können bestehende Schienensysteme dadurch sehr einfach erweitert werden. In einer vorteilhaften Ausführungsform des Montagewinkels ist die Verbindung der Befestigungselemente derart ausgebildet, dass der Neigungswinkel der miteinander verbundenen Befestigungselemente mit relativ geringem Kraftaufwand veränderbar ist. Auf diese Weise ist der Montagewinkel noch vielfältiger einsetzbar.

In einer weiteren sehr vorteilhaften Variante des Montagewinkels ist wenigstens ein Verbindungsbereich der Verbindungsstege mit den Klemmplatten als Sollbruchstelle ausgebildet, an dem die Schienenmutter von der Klemmplatte lösbar ist. Indem wenigstens eine der Schienenmuttem entfembar ist, ist der Montagewinkel sowohl für eine Verbindung von Profilschienen miteinander geeignet, als auch für eine Montage einer Profilschiene an der Wand einsetzbar. Somit sind mit einem Montagewinkel unterschiedliche Befestigungsarten realisierbar.

Im folgenden wird die Erfindung anhand von Ausführungsbeispielen unter Bezugnahme auf die schematischen Darstellungen näher erläutert. Es zeigen:
- Fig. 1: ein Ausführungsbeispiel eines erfindungsgemässen Befestigungselements als flacher Zuschnitt;
- Fig. 2: das Befestigungselement aus Fig. 1 im zusammengebogenen Gebrauchszustand;
- Fig. 3: das Befestigungselement aus Fig. 1 mit Blick auf die Schienenmutter;
- Fig. 4: das in die Schienenöffnung eingesetzte Befestigungselement im nichtfixierten Zustand;
- Fig. 5: das Befestigungselement aus Fig. 3 im vorfixierten Zustand; und
- Fig. 6: einen Montagewinkel umfassend zwei miteinander verbundene Befestigungselemente.

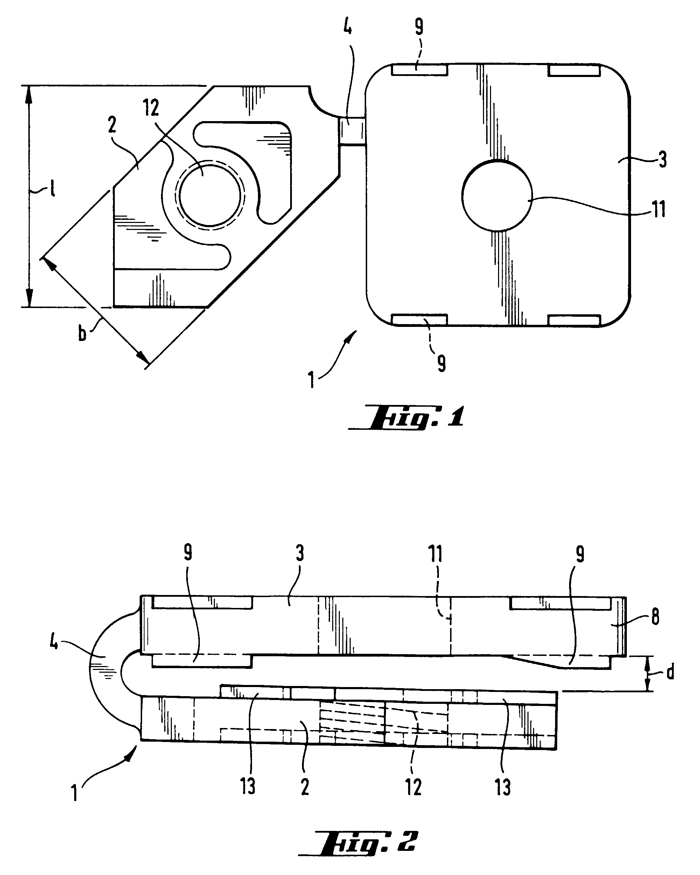

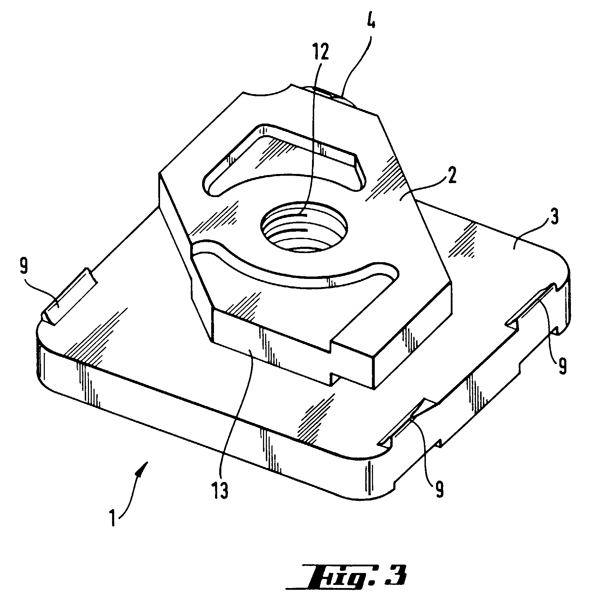

Ein Ausführungsbeispiel eines erfindungsgemässen Befestigungselements ist in Fig. 1 und in Fig. 2 jeweils gesamthaft mit dem Bezugszeichen 1 versehen. Fig. 1 zeigt das Befestigungselement als flachen Zuschnitt, der noch in den in Fig. 2 dargestellten Gebrauchszustand gebogen werden muss. Das Befestigungselement 1 wird beispielsweise aus einem Stahlblech geeigneter Stärke herausgestanzt. Die Materialstärke beträgt vorzugsweise etwa 3 mm bis etwa 5 mm. Die Geometrie des Zuschnittes für das erfindungsgemässe Befestigungselement 1 ist derart vorgesehen, dass der Zuschnitt bzw. das Ausstanzen mit minimalem Abfallanteil möglich ist. Für die Herstellung kann beispielsweise ein Folge-Verbundwerkzeug eingesetzt werden.

Das Befestigungselement 1 umfasst eine Schienenmutter 2, die gemäss dem dargestellten Ausführungsbeispiel im wesentlichen die Form eines modifizierten Parallelogramms aufweist. Die Höhe b des Parallelogramms ist kleiner als der als Länge I definierte Abstand der Breitseiten des Parallelogramms bzw. der Schienenmutter 2. Eine im wesentlichen rechteckige bzw. quadratische Klemmplatte 3 ist über einen federnden Verbindungssteg 4 einstückig mit der Schienenmutter 2 verbunden. In der Schienenmutter 2 und in der Klemmplatte 3 sind jeweils Bohrungen 11 bzw. 12, die als Lastangriffsmittel dienen und für die Aufnahme einer Gewindestange, einer Spannschraube oder dergleichen ausgebildet sind. Dazu ist die Bohrung 11 in der Klemmplatte 3 als Durchgangsbohrung ausgebildet, während die Bohrung 12 in der Schienenmutter 2 mit einem Innengewinde versehen ist.

In Fig. 2 ist das Befestigungselement 1 in seinen Gebrauchszustand zusammengebogen dargestellt. Die Klemmplatte 3 überragt die Schienenmutter 2 zumindest bereichsweise bzw. gemäss dem dargestellten Ausführungsbeispiel allseitig. Die Schienenmutter 2 und die Klemmplatte 3 sind in einem Abstand d voneinander angeordnet, der in dem dem Verbindungssteg 4 gegenüberliegenden Randabschnitt kleiner ist als im Anlenkbereich des Verbindungsstegs 4. Die Bohrungen 11, 12 in der Schienenmutter 2 und in der Klemmplatte 3 liegen axiale exakt übereinander. Auf diese Weise kann durch Einschrauben einer Gewindestange oder einer Spannschraube mit einem an der Klemmplatte 3 angreifenden Widerlager in die mit einem Innengewinde versehen Bohrung 12 in der Schienenmutter 2 der Abstand d zwischen der Klemmplatte 3 und der Schienenmutter 2 weiter verringert werden.

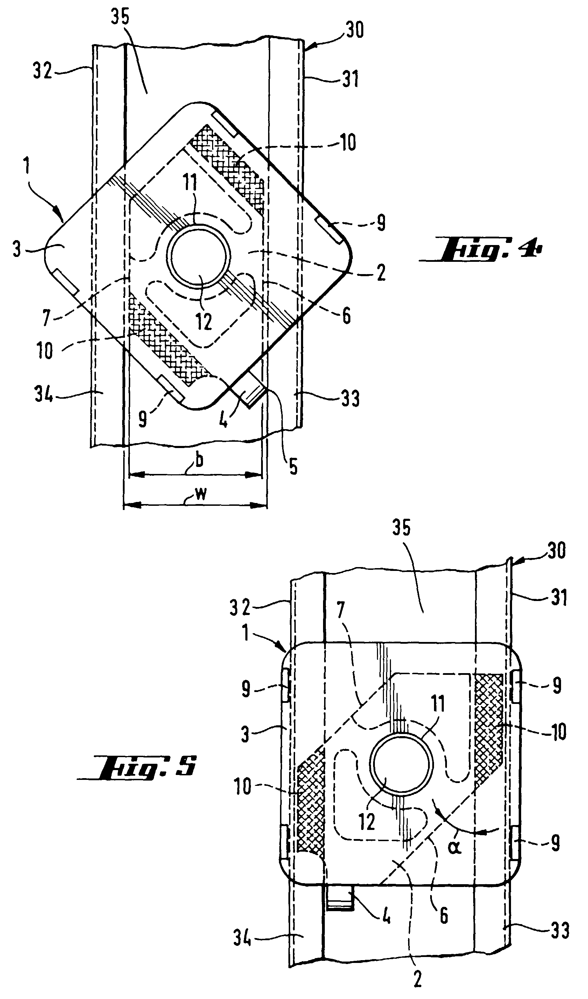

In Fig. 2 und in Fig. 3 sind Abprägungen 13 der Schienenmutter 2 dargestellt, die als Anschlag beim Spannen dienen. Die Schienenmutter 2 und die Klemmplatte 3 stehen aufeinander. Dadurch erhöht sich beim Spannen das erforderliche Drehmoment, und der Anwender hat eine Kontrolle über den Spannvorgang beim endgültigen Fixieren des Befestigungselements 1. In den Fig. 1 - 3 sind auch geprägte keilförmige Nasen 9 angedeutet, die an der Unterseite der Klemmplatte an deren Aussenrand abragen und deren Funktion weiter unter erläutert wird. Gemäss den Fig. 1 - 3 verläuft die Längserstreckung I der Schienenmutter 2 etwa diagonal zur Klemmplatte 3, vorzugsweise unter einem Winkel von etwa 45°.

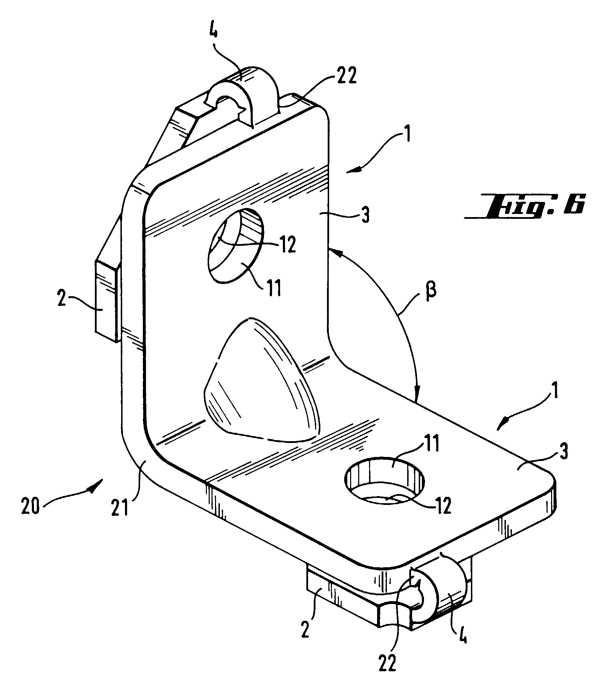

In den Fig. 4 und 5 ist das Befestigungselement 1 in Verbindung mit einer C-Profilsschiene 30 dargestellt. Dabei zeigt Fig. 4 das Befestigungselement 1 im nicht fixierten Zustand, während in Fig. 5 das Befestigungselement 1 im vorfixierten Zustand dargestellt ist. Die dargestellte Profilsschiene 30 weist einen im wesentlichen C-förmigen Querschnitt auf und besitzt eine in Längsrichtung verlaufende, schlitzartige Öffnung 35, deren Weite w von den einander zugewandten freien Enden 33, 34 zweier parallel zueinander verlaufender Schenkel 31, 32 berandet wird. Das Befestigungselement 1 ist mit der Schienenmutter 2 in die Öffnung 35 eingesetzt dargestellt. Gemäss Fig. 4 ist die Höhe b der strichliert angedeuteten Schienenmutter 2 geringer als die Weite w der Öffnung 35. Auf diese Weise kann die Schienenmutter 2 bei parallel zur Längserstreckung der Öffnung ausgerichteten Längsseiten 6, 7 durch die Öffnung 35 in das Innere der Profilschiene 30 eingeführt werden. Gemäss Fig. 4 ist der Verbindungssteg 4 derart an der Schienenmutter 2 angelenkt, dass er bei parallel zu der Längserstreckung der Öffnung 35 ausgerichteten Längsseiten 6, 7 der Schienenmutter 2 am freien Ende 33 des einen Schenkels anliegt. Vorzugsweise befindet sich dabei die Anlagekante 5 des Verbindungsstegs 4 in der Axialprojektion etwa in gerader Verlängerung der einen Längsseite 6 der Schienenmutter 2.

Fig. 5 zeigt das Befestigungselement 1 im vorfixierten Zustand an der Profilschiene 30. Dazu ist das Befestigungselement 1 um einen Winkel α gedreht worden, sodass die Längsseiten 6, 7 der Schienenmutter 2 gegenüber der Längserstreckung der Öffnung 35 geneigt sind. Bei der dargestellten Ausführungsvatiante des Befestigungselements 1 beträgt der Drehwinkel α etwa 45°. Die Anordnung des Verbindungsstegs 4 führt dazu, dass dieser die Verdrehung begrenzt, indem er am freien Ende 34 des gegenüberliegenden Schenkels 32 anliegt. Der dem Verbindungssteg 4 diagonal gegenüberliegende Randabschnitt 8 des Befestigungselements 1, an dem die Schienenmutter 2 und die Klemmplatte 3 den geringsten Abstand d aufweisen, nimmt das freie Ende 33 des anderen Schenkels 31 auf und klemmt es ein, da der Abstand d kleiner ist als die Dicke der freien Enden 33, 34. Dadurch kommt es zur Vorfixierung des Befestigungselements 1. Die von der Unterseite der Klemmplatte 3 abragenden Nasen 9 übergreifen die Aussenseiten der Schenkel 31, 32 und verhindern ein Ausformen der Schienenflanken. An den in Wirkverbindung mit den freien Enden 33, 34 der Schenkel 31, 32 stehenden Flächenabschnitten 10 der Schienenmutter 2 kann, wie angedeutet, eine Verzahnung, eine Rändelung oder dergleichen Struktur vorgesehen sein, die formschlüssig in eine korrespondierend ausgebildete Struktur an den freien Enden 33, 34 eingreift.

Fig. 6 zeigt einen Montagewinkel 20, der aus zwei erfindungsgemäss ausgebildeten Befestigungselementen 1 besteht. Jedes der beiden Befestigungselemente 1 umfasst eine Schienenmutter 2 und eine Klemmplatte 3, die über einen Verbindungssteg 4 einstückig miteinander verbunden sind. Die Befestigungselemente 1 sind an den dem Verbindungssteg 4 gegenüberliegenden Seiten 21 miteinander verbunden und unter einem Winkel β zueinander geneigt angeordnet. Vorzugsweise ist der Verbindungsbereich 21 derart ausgebildet, dass der Neigungswinkel β verstellbar ist. Wenigstens einer der Anbindungsbereiche 22 der Verbindungsstege 4 an den Klemmplatten 3 ist als Sollbruchstelle ausgebildet. Auf diese Weise kann zumindest an einem der miteinander zu einem Montagewinkel 20 verbundenen Befestigungselemente 1 die Schienenmutter 2 von der Klemmplatte 3 getrennt werden. Der modifizierte Montagewinkel 20 kann sodann direkt an einer Wand montiert werden. Dies erhöht die Flexibilität in der Anwendung des Montagewinkels 20. Es können auch mehrere Befestigungselemente 1 miteinander verbunden sein, wobei die Verbindungsbereiche der Befestigungselemente vorzugsweise derart ausgebildet sind, dass der Anwender die Neigungswinkel mit verhältnismässig geringem Kraftaufwand verändern kann.

Das erfindungsgemässe Befestigungelement wurde am Beispiel eines konkreten Ausführungsbeispiels erläutert. Die spezifisch dargestellten Abprägungen, Winkelverhältnisse und Formgebungen der Klemmplatte bzw. auch der Schienenmutter sind nur beispielhaft zu verstehen. Insbesondere reicht es bei der Formgebung der parallelogrammförmigen Schienenmutter aus, die Höhe und die Länge derart zu dimensionieren und gegebenenfalls zu modifizierten, dass sie durch die Öffnung in das Innere der Profilschiene eingeführt und dort derart verdreht werden kann, dass die Längserstreckung der Schienenmutter die Weite der Öffnung überbrückt. Die Klemmplatte wurde am Beispiel einer quadratischen Gestalt erläutert. Es versteht sich, dass sie auch die Gestalt eines beliebigen Polygons aufweisen kann oder von kreisförmiger Gestalt sein kann. Hinsichtlich ihrer Aussenkontur ist nur erforderlich, dass sie die Weite der Öffnung der Profilschiene überragt. Als Material ist beispielsweise Stahlblech einer bestimmten Stärke genannt. Das Befestigungselement könnte aber auch aus einer anderen Blechart oder aus Kunststoff gefertigt sein, wobei die erforderlichen Materialstärken von der gewünschten Federkraft und den geforderten Haltewerten abhängen.

## Patentansprüche

1. Befestigungselement für Profilschienen (30), die einen im wesentlichen C-förmigen Querschnitt besitzen und eine in Längsrichtung verlaufende, schlitzartige Öffnung (35) aufweisen, die von den einander zugewandten freien Enden (33, 34) zweier parallel zueinander ausgerichteter Schenkel (31, 32) berandet ist, mit einer Schienenmutter (2), die bei parallel zu der Längserstreckung der Öffnung (35) verlaufenden Längsseiten (6, 7) durch die schlitzartige Öffnung (35) in das Innere der Profilschiene (30) einführbar ist und innerhalb der Profilschiene (30) derart verdrehbar ist, dass ihre Längserstreckung (1), die grösser ist als die Weite (w) der schlitzartigen Öffnung (35), die Öffnung (35) überbrückt, und mit einer Klemmplatte (3), die die Schienenmutter (2) wenigstens bereichsweise überragt und in einem axialen Abstand (d) von der Schienenmutter (2) angeordnet ist, wobei der Abstand (d) unter Klemmung der freien Enden (33, 34) der Schenkel (31, 32) verringerbar ist, **dadurch gekennzeichnet**, dass die Klemmplatte (3) und die Schienenmutter (2) einstückig ausgebildet und über einen federnden Verbindungssteg (4) miteinander verbunden sind, der derart am Rand der Schienenmutter (2) angelenkt ist, dass er bei parallel zur Längserstreckung der Öffnung (35) verlaufenden Längsseiten (6, 7) der Schienenmutter (2) in Anlage mit dem freien Ende (33) des einen Schenkels (31) ist und bei gegenüber der Längserstreckung der Öffnung (35) verdrehten Längsseiten (6, 7) der Schienenmutter (2) in Anlage mit dem freien Ende (34) des gegenüberliegenden Schenkels (32) ist, und dass der Abstand (d) der Schienenmutter (2) von der Klemmplatte (3) wenigstens in einem Randabschnitt (8), der in Wirkverbindung mit dem freien Ende (33) eines Schenkels (31) bringbar ist, kleiner ist als die Dicke der freien Enden der Schenkel (33, 34).

2. Befestigungselement nach Anspruch 1, dadurch gekennzeichnet, dass der Verbindungssteg (4) eine Seitenkante (5) aufweist, deren Axialprojektion im wesentlichen in gerader Verlängerung einer Längsseite (6) der Schienenmutter (2) liegt.

3. Befestigungselement nach Anspruch 1 oder 2, dadurch gekennzeichnet, dass die Anordnung des Verbindungsstegs (4) derart gewählt ist, dass die in das Innere der Profilschiene (30) eingesetzte Schienenmutter (2) um einen Winkel (α) von etwa 45° verdrehbar ist.

4. Befestigungselement nach einem der vorangehenden Ansprüche, dadurch gekennzeichnet, dass der Randabschnitt (8), an dem der Abstand (d) der Klemmplatte (3) von der Schienenmutter (2) kleiner ist als die Dicke (h) der freien Enden (33, 34) der Schenkel (31, 32), dem Verbindungssteg (4) gegenüberliegend angeordnet und kleiner ist als der Abstand im Bereich des Verbindungsstegs (4).

5. Befestigungselement nach einem der vorangehenden Ansprüche, dadurch gekennzeichnet, dass an wenigstens zwei einander gegenüberliegenden Bereichen an der Unterseite der Klemmplatte (3) keilförmige Nasen (9) vorgesehen sind, die bei gegenüber der Längserstreckung der Öffnung (35) verdrehten Längsseiten (6, 7) der Schienenmutter (2) die Aussenseiten der Schenkel (31, 32) übergreifen.

6. Befestigungselement nach einem der vorangehenden Ansprüche, dadurch gekennzeichnet, dass die mit den einander zugewandten freien Enden (33, 34) der Schenkel (31, 32) in Wirkverbindung stehenden Flächen (10) der Schienenmutter (2) mit einer Verzahnung oder Rändelung oder dergleichen Struktur versehen sind, die in eine korrespondierend an den freien Enden (33, 34) ausgebildete Struktur eingreift.

7. Befestigungselement nach einem der vorangehenden Ansprüche, dadurch gekennzeichnet, dass die Klemmplatte (3) und die Schienenmutter (2) je eine Bohrung (11, 12) aufweisen, die einander axial überdecken und zur Aufnahme einer Gewindestange oder einer Spannschraube oder dergleichen ausgebildet sind.

8. Montagewinkel umfassend zwei oder mehrere Befestigungselemente (1) nach einem der vorangehenden Ansprüche, wobei zwei der Befestigungselemente (1) an ihren den Verbindungsstegen (4) gegenüberliegenden Seiten (21) der Klemmplatten (3) miteinander verbunden sind und unter einem Winkel (β) zueinander geneigt sind.

9. Montagewinkel nach Anspruch 8, dadurch gekennzeichnet, dass die Verbindungsbereiche (21) der Befestigungselemente derart ausgebildet sind, dass der Neigungswinkel (β) der Befestigungselemente (1) verstellbar ist.

10. Montagewinkel nach Anspruch 8 oder 9, dadurch gekennzeichnet, dass wenigstens einer der Anlenkbereiche der Verbindungsstege (4) mit den Klemmplatten (3) als Sollbruchstelle (22) ausgebildet ist, an der die Schienenmutter (2) von der zugehörigen Klemmplatte (3) lösbar ist.

## Claims

1. Fastening element for profile rails (3) of essentially C-shaped cross-section and with a slotlike opening (35) which extends in the longitudinal direction and which is defined by the free ends (33,34), which are facing each other, of two shanks (31, 32) which are aligned parallel to each other, with a rail nut (2) which is with longitudinal sides (6, 7) which extend parallel to the longitudinal extent of the opening (35) insertible through the slotlike opening (35) into the interior of the profile rail (30) and pivotal within the profile rail (30) in such a manner that its longitudinal extent (I), which is greater than the width (w) of the slotted opening (35), bridges the opening (35), and with a clamping plate (3) which at least sectionally projects over the rail nut (2) and is arranged at an axial distance (d) from the rail nut (2), and the distance (d) can be reduced upon clamping of the free ends (33, 34) of the shanks (31, 32), **characterised in that** the clamping plate (3) and the rail nut (2) are of integrated design and joined via a resilient connecting web (4) which is hinged to the edge of the rail nut (2) in such a manner that, with longitudinal sides (6, 7) of the rail nut (2) extending parallel to the longitudinal extent of the opening (35), abuts with the free end (33) of the one shank (31) and, with longitudinal sides (6, 7) of the rail nut (2) pivoted relative to the longitudinal extent of the opening (35), abuts with the free end (34) of the opposite shank (32), and the distance (d) of the rail nut (2) from the clamping plate (3) is at least in one edge section (8) which is effectively joined to the free end (33) of a shank (31), is smaller than the thickness of the free ends of the shanks (33, 34).

2. Fastening element according to Claim 1, **characterised in that** the connecting web (4) comprises a side edge (5) the axial projection of which lies essentially in a straight extension of a longitudinal side (6) of the rail nut (2).

3. Fastening element according to Claim 1 or 2, **characterised in that** the arrangement of the connecting web (4) is chosen in such a manner that the rail nut (2), which is inserted into the interior of the profile rail (30), is pivotal by an angle (α) of approximately 45°.

4. Fastening element according to one of the above claims, **characterised in that** the edge section (8) where the distance (d) of the clamping plate (3) from the rail nut (2) is smaller than the thickness (h) of the free ends (33, 34) of the shanks (31, 32) is arranged opposite the connecting web (4) and smaller than the distance in the area of the connecting web (4).

5. Fastening element according to one of the above claims, **characterised in that** in at least two opposite areas of the bottom of the clamping plate (3) are provided wedgeshaped protrusions (9) which, with longitudinal sides (6, 7) of the rail nut (2) pivoted relative to the longitudinal extent of the opening (35), reach over the outsides of the shanks (31, 32).

6. Fastening element according to one of the above claims, **characterised in that** the surfaces (10) of the rail nut (2), which are effectively joined to the free ends (33, 34), which are facing each other, of the shanks (31, 32), are provided with a toothing or knurling or similar structure which engages a structure which is correspondingly designed at the free ends (33, 34).

7. Fastening element according to one of the above claims, **characterised in that** the clamping plate (3) and the rail nut (2) each comprise a bore (11, 12) which axially overlap and are designed to receive a threaded rod or a clamping bolt or the like.

8. Angular assembly comprising two or more fastening elements (1) according to one of the above claims, and two of the fastening elements (1) are joined at their sides (21) of the clamping plates (3) opposite the connecting webs (4) and slanted towards each other at an angle (β).

9. Angular assembly according to Claim 8, **characterised in that** the connecting areas (21) of the fastening elements are designed in such a manner that the slant angle (β) of the fastening elements (1) is adjustable.

10. Angular assembly according to Claim 8 or 9, **characterised in that** at least one of the pivotal areas of the connecting webs (4) with the clamping plates (3) is designed as a nominal breaking point (22) where the rail nut (2) can be detached from the associated clamping plate (3).

## Revendications

1. Élément de fixation pour des rails profilés (30) qui possèdent une section transversale en C et présentent une ouverture en forme de fente (35) qui s'étend dans la direction longitudinale et qui est bordée par les extrémités libres en vis-à-vis (33, 34) de deux ailes (31, 32) orientées parallèlement l'une à l'autre, ledit élément de fixation comprenant un écrou à rail (2) qui, lorsque ses côtés longitudinaux (6, 7) s'étendent parallèlement à l'extension longitudinale de l'ouverture (35), peut être introduit à l'intérieur du rail profilé (30) à travers l'ouverture en forme de fente (35) et peut être tourné à l'intérieur du rail profilé (30), de façon que son extension longitudinale (1), laquelle est supérieure à la largeur (w) de l'ouverture en forme de fente (35), ponte l'ouverture (35), et comprenant une plaque de serrage (3) qui dépasse de l'écrou à rail (2) au moins par endroits et se trouve à une distance axiale (d) par rapport à l'écrou à rail (2), la distance (d) pouvant être réduite par serrage des extrémités libres (33, 34) des ailes (31, 32), caractérisé en ce que la plaque de serrage (3) et l'écrou à rail (2) sont réalisés d'un seul tenant et sont reliés entre eux par une patte de liaison élastique (4) qui est articulée sur le bord de l'écrou à rail (2) de façon que, lorsque les côtés longitudinaux (6, 7) de l'écrou à rail (2) s'étendent parallèlement à l'extension longitudinale de l'ouverture (35), elle soit en contact avec l'extrémité libre (33) de l'une des ailes (31) et que, lorsque les côtés longitudinaux (6, 7) de l'écrou à rail (2) sont tournés par rapport à l'extension longitudinale de l'ouverture (35), elle soit en contact avec l'extrémité libre (34) de l'aile opposée (32), et en ce que, au moins dans une portion de bord (8) servant à établir une liaison active avec l'extrémité libre (33) d'une aile (31), la distance (d) entre l'écrou à rail (2) et la plaque de serrage (3) est inférieure à l'épaisseur des extrémités libres des ailes (33, 34).

2. Élément de fixation selon la revendication 1, caractérisé en ce que la patte de liaison (4) comporte une arête latérale (5) dont la projection axiale se trouve sensiblement dans le prolongement rectiligne d'un côté longitudinal (6) de l'écrou à rail (2).

3. Élément de fixation selon la revendication 1 ou 2, caractérisé en ce que le point d'implantation de la patte de liaison (4) est choisi pour que l'écrou à rail (2) inséré à l'intérieur du rail profilé (30) puisse être tourné d'un angle (α) d'environ 45°.

4. Élément de fixation selon une des revendications précédentes, caractérisé en ce que la portion de bord (8) où la distance (d) entre la plaque de serrage (3) et l'écrou à rail (2) est inférieure à l'épaisseur (h) des extrémités libres (33, 34) des ailes (31, 32) est située à l'opposé de la patte de liaison (4), ladite distance (d) étant inférieure à celle existant dans la zone de la patte de liaison (4).

5. Élément de fixation selon une des revendications précédentes, caractérisé en ce que, sur au moins deux zones opposées l'une à l'autre et situées sur le dessous de la plaque de serrage (3), sont prévus des talons en forme de coins (9) qui, lorsque les côtés longitudinaux (6, 7) de l'écrou à rail (2) sont tournés par rapport à l'extension longitudinale de l'ouverture (35), recouvrent les côtés extérieurs des ailes (31, 32).

6. Élément de fixation selon une des revendications précédentes, caractérisé en ce que les faces (10) de l'écrou à rail (2) établissant une liaison active avec les extrémités libres en vis-à-vis (33, 34) des ailes (31, 32) sont munies d'une denture ou d'un moletage ou d'une structure analogue qui s'engage dans une structure de conception correspondante des extrémités libres (33, 34).

7. Élément de fixation selon une des revendications précédentes, caractérisé en ce que la plaque de serrage (3) et l'écrou à rail (2) sont pourvus chacun d'un trou (11, 12), lesquels coïncident axialement l'un avec l'autre et sont conçus pour recevoir une tige filetée ou une vis de serrage ou analogue.

8. Cornière de montage comprenant deux ou plusieurs éléments de fixation (1) selon une des revendications précédentes, deux des éléments de fixation (1) étant reliés entre eux par les côtés (21) des plaques de serrage (3) situés à l'opposé des pattes de liaison (4) et étant inclinés l'un par rapport à l'autre selon un angle (β).

9. Cornière de montage selon la revendication 8, caractérisée en ce que les zones de liaison (21) des éléments de fixation sont conçues de façon que l'angle d'inclinaison (β) des éléments de fixation (1) soit réglable.

10. Cornière de montage selon la revendication 8 ou 9, caractérisée en ce qu'au moins une des zones d'articulation des pattes de liaison (4) avec les plaques de serrage (3) est conformée en emplacement de rupture imposée (22) au niveau duquel l'écrou à rail (2) peut être détaché de la plaque de serrage correspondante (3).
